# FASCICULE DE BREVET EUROPEEN

(11) **EP 2 084 109 B1**
(45) Date de publication et mention de la délivrance du brevet: **23.03.2011**
(21) Numéro de dépôt: 07848317.9
(22) Date de dépôt: 04.10.2007
(51) Int. Cl.: C02F 1/56, C02F 1/52, C02F 1/76

(54) **PRODUIT SOLIDE COMPACTE BICOUCHE DE POTABILISATION D'EAU ET PROCÉDÉ DE PRÉPARATION**
ZWEISCHICHTIGES KOMPAKTIERTES FESTES PRODUKT ZUM TRINKBARMACHEN VON WASSER UND HERSTELLUNGSVERFAHREN
TWO-LAYER COMPACTED SOLID PRODUCT FOR WATER POTABILIZATION AND PREPARATION METHOD

(30) Priorité: 05.10.2006 FR 0608751
(43) Date de publication de la demande: 05.08.2009
(73) Titulaire: Eurotab, 42170 Saint Just Saint Rambert (FR)
(72) Inventeur: BRANLARD, Paul, 69005 Lyon (FR); RUBINSTENN, Gilles, 75005 Paris (FR)
(74) Mandataire: Maureau, Philippe
(86) Numéro de dépôt international: PCT/FR2007/001621
(87) Numéro de publication internationale: WO 2008/040884

(56) Documents cités:
- WO-A-96/32194
- WO-A-03/011769
- WO-A-2006/016073
- WO-A-2006/088901

## Description

La présente invention concerne un produit solide compacté de purification d'eau utilisable notamment dans une eau présentant une température particulièrement froide.

Le traitement de l'eau en vue de la purifier et/ou de la rendre potable fait l'objet de nombreuses recherches et est un sujet primordial pour l'humanité.

Parallèlement au développement de stations d'épuration et d'installations à grande échelle pour le traitement de l'eau des grandes agglomérations, en particulier dans les pays industrialisés, on cherche également à développer des moyens simples de traitement efficace et rapide d'un volume d'eau prédéterminé dans le but par exemple de rendre potable de l'eau issue d'un point d'eau naturel. Ces eaux naturelles peuvent par exemple provenir de fontes de neige ou de glaces ou de cours d'eaux situés à haute altitude : dans ce cas, ces eaux présentent en général une température particulièrement basse, par exemple inférieure à 10°C.

Il a déjà été proposé des produits pour désinfecter des eaux provenant de points d'eau naturels comme des mares ou des puits.

La purification d'une eau quelconque, en particulier en vue de la rendre potable, sous-entend plusieurs traitements et notamment une étape de clarification, destinée à séparer les matières minérales et organiques susceptibles d'être en suspension dans l'eau, et une étape de désinfection, destinée à tuer les bactéries et virus présents dans l'eau. La clarification se fait généralement par floculation et/ou coagulation puis sédimentation et filtration des substances organiques. La désinfection se fait généralement par libération de chlore actif bactéricide.

Par ailleurs, pour des raisons pratiques de manipulation et de stockage, et compte tenu de l'utilisation souhaitée, on cherche à disposer d'un moyen de potabilisation d'eau sous la forme d'une composition solide, comme par exemple une pastille ou une tablette, de préférence prédosée, que l'on pourra simplement jeter dans le volume prédéterminé d'eau à purifier, sans qu'il soit nécessaire de mettre en oeuvre des moyens plus complexes qu'une simple agitation ponctuelle.

Des compositions solides pour clarifier et désinfecter de l'eau sont déjà connues.

Ainsi, le document WO2006/016073 décrit des compositions sous forme de tablettes pour purifier un volume prédéterminé d'eau, comprenant entre autres un agent floculant et un désinfectant libérant du chlore actif.

Toutefois, il a été constaté que l'efficacité de telles tablettes n'est pas totalement satisfaisante lorsque l'eau à traiter est inférieure à une dizaine de degrés Celsius. En effet, il a été observé qu'à basse température, les flocs formés sont particulièrement fins et leur vitesse de décantation est faible. Il apparaît alors que la clarification d'une eau turbide très froide s'effectue dans un laps de temps qui peut être considéré comme trop long pour être efficace puisque la libération du chlore actif est réalisée dans une proportion non négligeable alors que les flocs, consommateurs de chlore, sont encore en suspension.

Or, selon l'OMS (Organisation Mondiale de la Santé), il est nécessaire de maintenir dans l'eau une concentration en chlore actif au moins égale à 0,50 mg/I pour disposer d'une eau désinfectée. Si la chloration est trop précoce par rapport à l'élimination des matières organiques en suspension consommatrices de chlore, il y a un risque de manque de chlore, qui est alors consommé par ces matières organiques, pour assurer la désinfection de l'eau. La présence d'une concentration minimale de chlore actif dans l'eau traitée est une condition nécessaire à sa désinfection et donc sa potabilité.

Ainsi, il existe le besoin d'une composition simple à manipuler, à stocker et à utiliser, qui permettrait de clarifier, par floculation, et de désinfecter, par une action bactéricide, un volume prédéterminé d'une eau particulièrement froide, par exemple d'une eau dont la température est inférieure ou égale à 10°C, et ce sans qu'il soit nécessaire de consommer de grandes quantités de désinfectant.

Le document WO02/00557 décrit des compositions de purification de l'eau comprenant au moins un coagulant, au moins un agent d'aide à la coagulation et au moins un floculant.

Toutefois, il subsiste le besoin d'un produit qui permettrait de réaliser l'étape de clarification, par floculation et décantation, d'une eau particulièrement froide, par exemple dont la température est inférieure ou égale à 10°C, de façon rapide, et en tout état de cause suffisamment rapidement pour ne pas compromettre l'efficacité du désinfectant par la présence de matières organiques en suspension lorsque ce désinfectant est libéré.

La présente invention vise à remédier à ce problème en proposant une composition solide unique, en particulier sous la forme d'une pastille ou d'une tablette, capable de clarifier et de désinfecter efficacement une eau quelconque pouvant être très froide sans surconsommation de désinfectant susceptible de nuire à sa qualité organoleptique.

En particulier, la Demanderesse a découvert qu'en introduisant, selon une composition spécifique, un composé anionique particulier, à savoir un alginate de sodium, dans un produit de purification d'eau, il était possible de réaliser l'étape de clarification de toute eau naturelle, et en particulier d'une eau très froide, de façon rapide et donc d'optimiser la désinfection subséquente de cette eau.

Un premier objet de l'invention est un produit solide compacté de purification d'eau comprenant:
- au moins une première couche comprenant au moins un système coagulant -floculant comprenant au moins un sel inorganique polyvalent, au moins un polymère cationique hydrosoluble et au moins un polymère anionique à haut poids moléculaire,
- au moins une deuxième couche comprenant au moins un désinfectant libérant du chlore actif au contact de l'eau,
caractérisé en ce que ledit système coagulant-floculant comprend en outre un alginate de sodium.

Le produit selon l'invention permet de clarifier et de désinfecter efficacement toute eau, quels que soient sa température, sa provenance et son état. Ainsi, l'eau d'une mare, d'un puits, et plus particulièrement l'eau froide de hauts plateaux ou provenant de la fonte de neiges ou de glaces, peut être purifiée avec le produit selon l'invention.

Grâce à l'agencement spécifique et aux compositions particulières respectives de ses deux couches, le produit selon l'invention permet de libérer dans un premier temps, l'agent coagulant-floculant, qui précipite les substances minérales et organiques en suspension, puis, dans un deuxième temps, alors que les flocs formés par la précipitation des substances organiques et de l'agent floculant ont décanté, l'agent désinfectant pour une action biocide ciblée sur les germes pathogènes présents dans l'eau.

En particulier, grâce à la composition particulière de la première couche, les flocs résultant de la précipitation des substances minérales et organiques en suspension décantent rapidement et, en tout état de cause avant que l'agent désinfectant ait libéré une quantité substantielle de chlore actif.

La combinaison des agents coagulants et floculants permet l'obtention de flocs de grande taille et de densité élevée, de sorte qu'après décantation, les flocs s'agglomèrent et forment un lit au fond du récipient qui ne se redisperse pas aisément lors du soutirage de l'eau clarifiée.

Ainsi, le chlore actif est libéré dans une eau déjà clarifiée et son action bactéricide n'est pas entravée par la présence de matières organiques fortement consommatrices de chlore.

Le produit selon l'invention est écologique et économique: il ne consomme pas plus de désinfectant que nécessaire. Du fait de sa forme solide, il est simple et pratique à utiliser, à stocker, à transporter et à manipuler.

Grâce au produit selon l'invention, une filtration de l'eau n'est pas absolument nécessaire.

Le produit selon l'invention est un produit solide compacté comprenant au moins deux couches.

La première couche du produit selon l'invention comprend au moins un système coagulant-floculant.

Par « système coagulant-floculant », on entend, selon la présente demande, un système dont le ou les composés vont réagir avec les substances minérales et organiques en suspension présentes dans l'eau à purifier en provoquant leur précipitation sous la forme de flocs, c'est-à-dire de solides de densité supérieure à 1, qui vont, après décantation, se déposer et sédimenter au fond du volume d'eau à purifier. Le système coagulant-floculant permet ainsi de clarifier l'eau à traiter.

Le système coagulant-floculant du produit selon l'invention comprend au moins un sel inorganique polyvalent, au moins un polymère cationique hydrosoluble, au moins un polymère anionique à haut poids moléculaire et au moins un alginate de sodium.

La combinaison d'un sel inorganique polyvalent, par exemple comme un sel de métal trivalent, qui est un coagulant, et d'un polymère cationique hydrosoluble, qui est un floculant, permet une floculation et une agrégation des flocs formés par précipitation.

De façon surprenante, la combinaison d'un polymère anionique de très haut poids moléculaire et d'un alginate de sodium avec le sel inorganique polyvalent et le polymère cationique hydrosoluble décrits ci-dessus entraîne, même dans une eau très froide, par exemple présentant une température inférieure ou égale à 10°C, un grossissement conséquent des flocs formés et donc une décantation accélérée de ces flocs.

Un alginate de sodium convenant particulièrement bien à la présente invention est le produit vendu sous la dénomination commerciale « PROTANAL® LF200 alginate » par la société FMC BioPolymer.

De préférence, l'alginate de sodium est présent dans ladite première couche à une teneur allant de 0,1 à 10% en poids, de préférence encore allant de 2 à 5% en poids, par rapport au poids de ladite première couche.

De préférence, la teneur en alginate de sodium dans l'eau à traiter est de 2 à 10 ppm.

Dans un mode de réalisation de l'invention, ledit polymère anionique à haut poids moléculaire présente un poids moléculaire supérieur ou égal à 5 000 000 D, et de préférence supérieur ou égal à 10 000 000 D.

De préférence, ledit polymère anionique à haut poids moléculaire est présent dans ladite première couche à une teneur allant de 0,01 à 0,4% en poids par rapport au poids de ladite première couche.

De préférence, ledit polymère anionique à haut poids moléculaire est un copolymère hydrosoluble d'acrylate de sodium. Des copolymères hydrosolubles d'acrylate de sodium convenant particulièrement bien à la présente invention sont les produits vendus sous la dénomination commerciale « FLOPAM^{®} AN 934 » par la société SNF et sous la dénomination commerciale « MAGNAFLOC^{®} LT 27 » par la société CIBA.

De préférence, la teneur en copolymères d'acrylate de sodium dans l'eau à traiter est de 0,1 à 0,5 ppm.

De préférence, le sel inorganique polyvalent est un sel de métal trivalent choisi parmi le sulfate ferrique, le chlorure ferrique, le sulfate d'aluminium, le polyhydroxychlorure d'aluminium et leurs mélanges. De préférence encore, le sel de métal trivalent est le sulfate ferrique hydraté. Ces composés sont bien connus et disponibles commercialement.

De préférence, le sulfate ferrique hydraté est présent dans le volume d'eau à traiter à une teneur allant de 10 à 30 ppm exprimé en Fe.

De préférence, le polymère cationique hydrosoluble est un polymère cationique hydrosoluble de diallyldiméthylammonium chlorure, de préférence de très haut poids moléculaire, par exemple de poids moléculaire supérieur ou égal à 500 000 D. Un composé convenant particulièrement pour la présente invention est le polymère de diallyldiméthylammonium chlorure vendu sous forme de poudre sous la dénomination commerciale « FLOQUAT^{®} DB45 PWG » par la société SNF.

De préférence, le polymère cationique est présent dans le volume d'eau à traiter à une teneur allant de 1 à 2 ppm.

Dans une forme préférée de réalisation de l'invention, la première couche comprend en outre du sable micronisé. L'ajout de sable micronisé dans la première couche permet de densifier les flocs et ainsi d'accélérer leur vitesse de décantation.

Dans une forme préférée de réalisation de l'invention, la première couche comprend un absorbeur d'humidité, comme par exemple du trisilicate de magnésium. Un tel absorbeur d'humidité facilite le pastillage du produit selon l'invention lors de sa fabrication, en présence d'une humidité relative élevée de l'atmosphère environnant la pastilleuse. De préférence, le trisilicate de magnésium est présent dans la première couche à une teneur inférieure ou égale à 3% en poids, de préférence encore inférieure ou égale à 1,5% en poids, par rapport au poids de la première couche.

De préférence, la première couche comprend en outre un système désintégrant. Par « système désintégrant », on entend, selon la présente invention, un système dont le ou les composés vont réagir immédiatement au contact de l'eau pour conduire à la désintégration rapide, de préférence en moins d'une minute, de préférence encore en moins de 30 secondes, de la première couche.

De préférence, le système désintégrant comprend au moins un agent désintégrant choisi parmi la cellulose et ses dérivés, les associations effervescentes d'un polyacide organique hydrosoluble et d'une base faible, et leurs mélanges.

Dans une forme de réalisation de l'invention, l'agent désintégrant est une cellulose, par exemple amorphe ou cristalline. Un exemple de cellulose amorphe convenant à la présente invention est le produit vendu sous la dénomination commerciale « ARBOCEL^{®} A300 » par la société J.Retténmaier & Söhne. Un exemple de cellulose microcristalline convenant à la présente invention est le produit vendu sous la dénomination commerciale « VIVAPUR^{®} 200 » par la société J.Rettenmaier & Söhne.

Dans une autre forme de réalisation de l'invention, l'agent désintégrant est formé de l'association effervescente d'une base faible et du sel de métal trivalent décrit ci-dessus. De préférence, la base faible est le bicarbonate de sodium.

De préférence, l'agent désintégrant est présent dans la première couche à une teneur inférieure ou égale à 50% en poids, de préférence à une teneur allant de 20% à 40%, en poids, par rapport au poids de la première couche.

En effet, il a été constaté qu'au-delà d'une concentration de 50% en poids d'agent désintégrant dans la première couche, la décantation des flocs formés est fortement ralentie, retardant la clarification de l'eau à traiter.

La combinaison d'un système floculant et d'un système désintégrant tels que définis ci-dessus dans la première couche du produit selon l'invention permet de diffuser rapidement dans l'eau à traiter les coagulants et les floculants, et ce du fait de la désintégration immédiate, de préférence en moins d'une minute, et de préférence encore en moins de trente secondes, de cette première couche au contact de l'eau. Ainsi, la clarification de l'eau peut avoir lieu sans délai. La sédimentation des matières précipitées s'effectue en quelques minutes et conduit à l'obtention d'une eau présentant une très faible turbidité.

La deuxième couche du produit selon l'invention comprend au moins un désinfectant libérant du chlore actif au contact de l'eau.

De préférence, la deuxième couche comprend en outre au moins un excipient du désinfectant, ledit excipient libérant le désinfectant dans l'eau à un taux contrôlé tel que l'association excipient-désinfectant libère de 0,1 à 10 mg/l de chlore actif par heure.

Ainsi, grâce au produit selon l'invention, la libération de chlore actif est contrôlée, quelle que soit la vitesse de dissolution intrinsèque du désinfectant dans l'eau. Ainsi, tout désinfectant peut être utilisé et il en résulte une simplicité de fabrication du produit.

Le désinfectant libérant du chlore actif peut être tout dérivé de chlore connu pour libérer du chlore actif, quelle que soit la vitesse intrinsèque de dissolution de ce dérivé dans l'eau. De préférence, le désinfectant est choisi parmi le sel de sodium de N-chloro-4-méthylbenzène sulfonamide sous forme anhydre ou dihydratée, le sel de sodium de 1,3-dichloro-s-triazine-2,4,6 trione sous forme anhydre ou dihydratée, et leurs mélanges. De préférence encore, le désinfectant est le sel de sodium de 1,3-dichloro-s-triazine-2,4,6 trione sous forme dihydratée.

Ces composés sont bien connus et sont disponibles commercialement auprès de la société OXYCHEM.

Par « excipient », on entend, au sens de la présente demande, un ou plusieurs composés distincts du désinfectant et servant de véhicule à ce désinfectant, qui sont de plus inertes chimiquement vis-à-vis du désinfectant, c'est-à-dire qui ne réagissent pas avec lui, tant lorsque le produit de l'invention est sous forme stockée que lors de son utilisation dans l'eau à purifier.

De préférence, l'excipient de la deuxième couche du produit selon l'invention libère le désinfectant dans l'eau à un taux contrôlé tel que l'association excipient-désinfectant libère de 0,1 à 10 mg/l de chlore actif par heure, de préférence à un taux allant de 0,2 à 5 mg/l de chlore actif par heure. Ainsi, la diffusion du désinfectant dans l'eau à traiter est progressive et contrôlée et n'interfère pas avec l'étape de clarification.

Dans une forme de réalisation de l'invention, l'excipient est choisi parmi les composés hydrosolubles à dissolution lente. Ainsi, de préférence, l'excipient est choisi parmi la gomme arabique ou acacia, la gomme adragante, la gomme de caroubier, la gomme xanthane, la gomme guar, et leurs mélanges.

Ainsi, lors de la dissolution progressive de l'excipient dans l'eau, le désinfectant est peu à peu libéré et diffuse dans l'eau à traiter.

Dans une autre forme de réalisation, l'excipient est choisi parmi les composés insolubles hydrophiles gonflant dans l'eau. Ainsi, de préférence, l'excipient est choisi parmi les amidons modifiés, les amidons gélatinisés, la fécule de pomme de terre, et leurs mélanges. Un exemple d'amidon gélatinisé convenant particulièrement à la présente invention est le produit vendu sous la dénomination commerciale « LYCATACB^{®} PGS » par la société Roquette.

Dans le cas où l'excipient est un tel composé insoluble hydrophile gonflant dans l'eau, la libération progressive du désinfectant dans l'eau à traiter se fait par la diffusion de l'eau au sein de l'excipient insoluble.

Ainsi, grâce à la présence de l'excipient particulier qui contrôle la libération du désinfectant dans la deuxième couche, et du fait que cette deuxième couche est distincte de la première couche, le désinfectant n'est pas entraîné avec les agents coagulants et floculants de la première couche qui diffusent très rapidement dans l'eau grâce au système désintégrant. Le désinfectant n'est donc pas prématurément consommé par les substances en suspension avant que ces dernières ne soient précipitées et sédimentent au fond du volume d'eau à traiter.

La deuxième couche du produit selon l'invention garde son intégrité pendant la première phase du traitement, c'est-à-dire pendant la clarification, qui dure généralement moins d'une minute, voire moins de trente secondes. La deuxième couche peut ensuite assurer sa fonction de désinfection par libération progressive et continue, en quelques heures, du désinfectant qui va pouvoir agir sur les micro-organismes pathogènes susceptibles d'être présents dans l'eau à traiter, sans interférer avec les flocs formés lors de la première phase, concentrés au fond du volume à traiter.

De préférence, la deuxième couche comprend un système effervescent. En effet, un système effervescent facilite la diffusion de l'eau entraînant la libération de chlore actif.

De préférence, le système effervescent comprend un mélange d'une base faible, telle que le bicarbonate de sodium, et d'un polyacide organique hydrosoluble, de préférence choisi parmi l'acide citrique, l'acide malique, l'acide tartrique, l'acide malonique, l'acide fumarique, l'acide maléique, l'acide adipique, l'acide succinique et leurs mélanges.

De préférence, le système effervescent est présent dans la deuxième couche à une teneur inférieure ou égale à 50% en poids, de préférence à une teneur allant de 10% à 40%, en poids, par rapport au poids de la deuxième couche.

Dans une forme préférée de réalisation de l'invention, la densité de la deuxième couche est strictement inférieure à 1, et de préférence va de 0,70 à 0,95. Ainsi, en fin de première phase, lorsque la première couche est totalement désagrégée, la deuxième couche remonte à la surface de l'eau à traiter et flotte. Elle est alors totalement éloignée des flocs formés lors de la première phase et la diffusion progressive et continue du désinfectant peut se faire dans les meilleures conditions et sans consommation excessive et inutile d'agent désinfectant.

Le produit selon l'invention peut comprendre des composés additionnels comme des colorants, des parfums, etc...

De préférence, tous les composés constituant le produit selon l'invention sont de qualité alimentaire, c'est-à-dire peuvent être ingérés par l'homme sans danger pour sa santé.

Le produit selon l'invention peut avoir toute forme géométrique possible. Dans une forme de réalisation de l'invention, le produit est sous la forme d'une pastille ou d'une tablette et les deux couches sont adjacentes.

Dans une autre forme de réalisation de l'invention, est sous la forme d'un comprimé ou d'un galet, la première couche enrobant la deuxième couche qui forme un noyau.

Un autre objet de l'invention est un procédé de préparation d'un produit solide compacté de purification d'eau comprenant au moins une première couche et au moins une deuxième couche, caractérisé en ce qu'il comprend les étapes suivantes :
- a°) on prépare un premier mélange pulvérulent comprenant au moins un système coagulant-floculant comprenant au moins un sel inorganique polyvalent, au moins un polymère cationique hydrosoluble, au moins un polymère anionique à haut poids moléculaire et au moins un alginate de sodium,
- b°) on prépare un deuxième mélange pulvérulent comprenant au moins un désinfectant libérant du chlore actif au contact de l'eau,
- c°) on précompacte le mélange obtenu en b°) dans une pastilleuse,
- d°) on rajoute dans la pastilleuse le mélange obtenu en a°) et on compacte le tout pour obtenir un produit bicouche.

Le produit selon l'invention est de préférence préparé par compression directe à l'aide d'une pastilleuse. Ce procédé est connu.

De préférence, le premier mélange pulvérulent comprend en outre au moins un absorbeur d'humidité, par exemple du trisilicate de magnésium. Un tel absorbeur d'humidité facilite le compactage de l'étape d°) du procédé de fabrication du produit selon l'invention, en présence d'une humidité relative élevée de l'atmosphère environnant la pastilleuse.

Dans une autre forme de réalisation, le produit selon l'invention peut comprendre, outre la première et la deuxième couche, une ou plusieurs couches additionnelles, comme par exemple une couche intermédiaire séparant la première et la deuxième couche ou encore une couche externe.

Le degré de compaction de la première couche et celui de la deuxième couche sont ajustés selon les vitesses de dissolution respectives désirées pour chacune de ces couches au sein de l'eau à traiter.

La présente invention va maintenant être illustrée à l'aide des exemples suivants.

### EXEMPLES:

Ci-après est donnée la signification des termes utilisés dans les exemples qui suivent :
- Sulfate ferrique heptahydraté : sous forme de poudre, vendu par la société Dr. Lohmann.
- FLOQUAT^{®} DB45 PWG : polymère cationique hydrosoluble de diallyldiméthylammonium chlorure sous forme de poudre, de poids moléculaire voisin de 500 000 D, vendu par la société SNF.
- DCCNa, 2H₂O : sel de sodium de 1,3-dichloro-s-triazine-2,4,6 trione sous forme de dihydrate, encore appelé dichloroisocyanurate de sodium sous forme de dihydrate, sous forme de poudre
- LYCATAB^{®} PGS : amidon gélatinisé, sous forme de poudre, vendu par la société Roquette.
- VIVAPUR® 200 : cellulose microcristalline sous forme de poudre vendue par la société J.Rettenmaier & Söhne
- FLOPAM® AN 934 PWG: copolymère anionique d'acrylate de sodium de poids moléculaire voisin de 15 000 000 D, vendu par la société SNF.
- PROTANAL® LF200 alginate : alginate de sodium, de viscosité voisine de 200 à 400 mPa.s à 1% en solution aqueuse, sous forme de poudre, vendu par la société FMC BioPolymer.
- MACROSORB® MS33 F : trisilicate de magnésium sous forme de poudre, vendu par la société INEOS Silicas.

### EXEMPLE 1 (selon l'invention) :

Cet exemple illustre l'invention dans le cas où la température de l'eau à traiter est d'environ 8°C.

On dispose de 200 litres d'eau turbide (environ 400 NTU) préparée à partir d'eau de rivière de turbidité d 15 NTU, à laquelle on a ajouté une terre argileuse pour atteindre cette turbidité.

Selon les recommandations de l'OMS, une eau est considérée non turbide si sa turbidité est strictement inférieure à 5 NTU.

Le pH de l'eau à traiter est voisin de 7,2.

En vue de traiter ce volume de 200 litres d'eau turbide, on prépare une pastille bicouche de 36,7 g, la première couche assurant la clarification étant appelée la couche A et pesant 26,2 g, la deuxième couche assurant la désinfection de l'eau à traiter étant appelée la couche B et pesant 10,5 g. Le diamètre de la pastille est de 45 mm. La pastille est préparée par compression directe. La composition des couches et le taux de chaque ingrédient résultant dans le volume d'eau à traiter sont donnés ci-après:

| **Composition couche A** | g dans la couche A | mg/l eau à traiter |
|---|---|---|
| Sulfate ferrique heptahydraté | 9,7 | 48,5* |
| FLOQUAT^{®} DB 45 PWG | 0,4 | 2,0 |
| VIVAPUR^{®} 200 | 7,0 | 35,0 |
| Bicarbonate de sodium | 8,0 | 40,0 |
| FLOPAM^{®} AN 934 | 0,1 | 0,5 |
| Alginate de sodium | 1,0 | 5,0 |

| | | |
|---|---|---|
| * correspond à 10 mg/l exprimé en Fe. | | |

| **Composition couche B** g | dans la couche B | mg/l eau à traiter |
|---|---|---|
| LYCATAB^{®} PGS | 6,0 | 30,0 |
| Acide adipique | 1,4 | 7,0 |
| Bicarbonate de sodium | 2,1 | 10,5 |
| DCCNa, 2H₂O | 1,0 | 5,0 |

La pastille bicouche est introduite dans l'eau, sous agitation manuelle pendant trois minutes. La pastille tombe au fond du récipient et la couche A de la pastille se désagrège par effervescence en vingt secondes environ.

Des flocs se forment rapidement en quatre minutes.

On arrête l'agitation et on laisse décanter les matières en suspension. La décantation des flocs est effective en vingt minutes. La partie de la pastille restante (couche B) remonte à la surface, flotte et reste en surface. Elle libère ainsi le chlore actif en 90 minutes à 15°C.

Le taux de chlore actif mesuré dans l'eau, après transvasement sans perturber le décantat déposé au fond du récipient, puis brassage de l'eau récupérée, est de 0,6 mg/l, deux heures après l'arrêt de l'agitation.

La turbidité finale de l'eau décantée est de 5 NTU. Le taux de Fe dosé est de 0,2 mg/l. Un tel taux résiduel de Fe est admis par l'OMS et ne présente pas de danger pour la santé humaine.

### EXEMPLE 2 (selon l'invention):

Cet exemple illustre l'invention dans le cas où la température de l'eau est d'environ +2°C.

On dispose de 200 litres d'eau turbide de turbidité 450 NTU.

La composition de la pastille bicouche et la procédure suivie pour le traitement de l'eau sont les mêmes que dans l'exemple 1.

Les flocs se forment en dix minutes. La décantation des flocs est effective en trente minutes.

Le taux de chlore actif final mesuré dans l'eau décantée et brassée est de 0,6 mg/l mesuré après 2 heures trente minutes. La turbidité finale est de 7 NTU. Le taux de Fe dosé est de 0,3 mg/l.

### EXEMPLE 3 (selon l'invention):

Cet exemple illustre l'invention dans le cas où la température de l'eau est d'environ+25°C.

On dispose de 200 litres d'eau turbide de turbidité de 150 NTU.

La composition de la pastille bicouche et la procédure suivie pour le traitement de l'eau sont les mêmes que dans l'exemple 1.

Les flocs se forment en deux minutes.

La décantation des flocs est effective en 15 minutes et le taux de chlore actif final mesuré dans l'eau décantée et brassée est de 0,8 mg/l mesuré après 30 minutes. La turbidité finale est de 5 NTU. Le taux de Fe résiduel dosé est de 0,2 mg/l.

### EXEMPLE 4 (selon l'invention):

Cet exemple illustre l'invention dans le cas où la température de l'eau est d'environ+8,5°C et la turbidité de l'eau est forte.

On dispose dans un container de 1000 litres d'eau turbide de turbidité de 850 NTU.

On introduit 5 pastilles dans le container d'eau à traiter. La composition des pastilles bicouche et la procédure suivie pour le traitement de l'eau sont les mêmes que dans l'exemple 1.

La décantation des flocs est effective en 60 minutes et le taux de chlore actif final mesuré dans l'eau décantée et brassée est de 0,6 mg/l mesuré après 90 minutes. La turbidité finale est de 7 NTU. Le taux de Fe résiduel dosé est de 0,2 mg/l.

### EXEMPLE 5 (comparatif)

On prépare une pastille bicouche dont la composition de la couche A est modifiée en ce sens qu'elle ne contient pas de floculants anioniques :

| **Composition couche A** | g dans la couche A | mg/l eau à traiter |
|---|---|---|
| Sulfate ferrique heptahydraté | 9,7 | 48,5 |
| FLOQUAT^{®} DB 45 PWG | 0,6 | 3,0 |
| VIVAPUR^{®} 200 | 7,0 | 35,0 |
| Bicarbonate de sodium | 8,0 | 40,0 |

La composition de la couche B est inchangée :

| **Composition couche B** | g dans la couche B | mg/l eau à traiter |
|---|---|---|
| LYCATAB^{®} PGS | 6,0 | 30,0 |
| Acide adipique | 1,4 | 7,0 |
| Bicarbonate de sodium | 2,1 | 10,5 |
| DCCNa, 2H₂O | 1,0 | 5,0 |

On dispose de 200 litres d'eau turbide de turbidité environ 520 NTU à une température de +3°C.

Après 2 heures de décantation, la turbidité de l'eau traitée est de 25 NTU et la teneur en chlore actif est de 0,3 mg/l. Le taux de Fe dosé est de 0,8 mg//l.

### EXEMPLE 6 :

Le présent exemple est un comparatif entre une pastille conforme à l'invention, dont la couche assurant la clarification appelée ci-après A1 comprend de l'alginate de sodium, et une pastille de l'art antérieur, dont la couche assurant la clarification appelée ci-après A2, ne comprend pas d'alginate de sodium, en vue de traiter une eau à 5°C.

Les compositions respectives des couches A1 et A2 sont données dans le tableau ci-après :

| **Composition couche assurant la clarification** | A1 (invention) (g dans la couche) | A2 (comparative) (g dans la couche) |
|---|---|---|
| Sulfate ferrique heptahydraté | 9,7 | 9,7 |
| VIVAPUR^{®} 200 | 7,0 | 7,0 |
| Bicarbonate de sodium | 8,0 | 8,0 |
| Trisilicate de magnésium | 0,25 | 0,25 |
| FLOBEAD® DB45 PWG | 0,4 | 0,4 |
| FLOPAM^{®} AN 934 | 0,08 | 0,08 |
| Alginate de sodium | 1,0 | 0,0 |

Dans lequel le produit « FLOBEAD® DB45 PWG est un polymère de chlorure de diallyldiméthyl-ammonium vendu par la société SNF FLOERGER.

On dispose de 200 litres d'eau turbide (environ 400 NTU) préparée à partir d'eau de rivière de turbidité d 15 NTU, à laquelle on a ajouté une terre argileuse pour atteindre cette turbidité.

Le pH de l'eau à traiter est voisin de 7,2.

En vue de traiter ce volume de 200 litres d'eau turbide, on prépare deux pastilles bicouches de la même façon que dans l'exemple 1, la couche assurant la désinfection de l'eau à traiter étant identique à la couche B de l'exemple 1 et la couche assurant la clarification étant la couche A1 pour la pastille selon l'invention, et la couche A2 pour la pastille selon l'art antérieur. On traite l'eau de la façon décrite dans l'exemple 1.

Les résultats de la turbidité de l'eau en fonction du temps sont donnés dans le tableau ci-après :

| Pastille comprenant | Turbidité à 30 min (NTU) | Turbidité à 60 min (NTU) |
|---|---|---|
| Couche A1 (invention) | 18 | 7 |
| Couche A2 (comparative) | 52 | 30 |

Ainsi, la pastille selon l'invention permet de purifier l'eau de façon plus efficace que la pastille selon l'art antérieur.

### EXEMPLE 7 :

Le présent exemple est un comparatif entre une pastille conforme à l'invention, dont la couche assurant la clarification appelée ci-après A3 comprend de l'alginate de sodium, et une pastille de l'art antérieur, dont la couche assurant la clarification appelée ci-après A4, ne comprend pas d'alginate de sodium, en vue de traiter une eau à 12°C.

Les compositions respectives des couches A3 et A4 sont données dans le tableau ci-après :

| **Composition couche assurant la clarification** | A3 (invention) (g dans la couche) | A4 (comparative) (g dans la couche) |
|---|---|---|
| Sulfate ferrique heptahydraté | 9,7 | 9,7 |
| VIVAPUR^{®} 200 | 7,0 | 7,0 |
| Bicarbonate de sodium | 8,0 | 8,0 |
| Trisilicate de magnésium | 0,25 | 0,25 |
| FLOBEAD® DB45 PWG | 0,4 | 0,4 |
| FLOPAM^{®} AN 934 | 0,08 | 0,4 |
| Alginate de sodium | 3,0 | 0,0 |

On dispose de 200 litres d'eau turbide (environ 400 NTU) préparée à partir d'eau de rivière de turbidité d 15 NTU, à laquelle on a ajouté une terre argileuse pour atteindre cette turbidité.

Le pH de l'eau à traiter est voisin de 7,2.

En vue de traiter ce volume de 200 litres d'eau turbide, on prépare deux pastilles bicouches de la même façon que dans l'exemple 1, la couche assurant la désinfection de l'eau à traiter étant identique à la couche B de l'exemple 1 et la couche assurant la clarification étant la couche A3 pour la pastille selon l'invention, et la couche A4 pour la pastille selon l'art antérieur. On traite l'eau de la façon décrite dans l'exemple 1.

Les résultats de la turbidité de l'eau en fonction du temps sont donnés dans le tableau ci-après :

| Pastille comprenant | Turbidité à 30 min (NTU) | Turbidité à 60 min (NTU) |
|---|---|---|
| Couche A3 (invention) | 8 | 7 |
| Couche A4 (comparative) | 25 | 20 |

Ainsi, la pastille selon l'invention permet de purifier l'eau de façon plus efficace que la pastille selon l'art antérieur.

## Revendications

1. Produit solide compacté de purification d'eau comprenant:
- au moins une première couche comprenant au moins un système coagulant-floculant comprenant au moins un sel inorganique polyvalent, au moins un polymère cationique hydrosoluble et au moins un polymère anionique à haut poids moléculaire,
- au moins une deuxième couche comprenant au moins un désinfectant libérant du chlore actif au contact de l'eau,
**caractérisé en ce que** ledit système coagulant-floculant comprend en outre un alginate de sodium.

2. Produit selon la revendication précédente, **caractérisé en ce que** l'alginate de sodium est présent dans ladite première couche à une teneur allant de 0,1 à 10% en poids, de préférence allant de 2 à 5% en poids, par rapport au poids de ladite première couche.

3. Produit selon l'une quelconque des revendications précédentes, **caractérisé en ce que** ledit polymère anionique à haut poids moléculaire présente un poids moléculaire supérieur ou égal à 5 000 000 D, de préférence supérieur ou égal à 10 000 000 D, ledit polymère anionique à haut poids moléculaire étant présent dans ladite première couche à une teneur allant de 0,01 à 0,4% en poids par rapport au poids de ladite première couche.

4. Produit selon l'une quelconque des revendications précédentes, **caractérisé en ce que** ledit polymère anionique à haut poids moléculaire est un copolymère hydrosoluble d'acrylate de sodium.

5. Produit selon l'une quelconque des revendications précédentes, **caractérisé en ce que** le sel inorganique polyvalent est un sel de métal trivalent choisi parmi le sulfate ferrique, le sulfate d'aluminium, le polyhydroxychlorure d'aluminium et leurs mélanges.

6. Produit selon l'une quelconque des revendications précédentes, **caractérisé en ce que** le polymère cationique hydrosoluble est un polymère cationique hydrosoluble de diallyldiméthylammonium chlorure.

7. Produit selon l'une quelconque des revendications précédentes, **caractérisé en ce que** la première couche comprend en outre au moins un système désintégrant comprenant au moins un agent désintégrant choisi parmi la cellulose et ses dérivés, les associations effervescentes d'un polyacide organique hydrosoluble et d'une base faible, et leurs mélanges, l'agent désintégrant étant présent dans la première couche à une teneur inférieure ou égale à 50% en poids, de préférence à une teneur allant de 20% à 40%, en poids, par rapport au poids de la première couche.

8. Produit selon la revendication précédente, **caractérisé en ce que** l'agent désintégrant est une cellulose, par exemple amorphe ou cristalline.

9. Produit selon les revendications 5 et 7, **caractérisé en ce que** l'agent désintégrant est formé de l'association effervescente d'une base faible, de préférence le bicarbonate de sodium, et dudit sel de métal trivalent.

10. Produit selon l'une quelconque des revendications précédentes, **caractérisé en ce que** ladite deuxième couche comprend en outre au moins un excipient du désinfectant, ledit excipient libérant le désinfectant dans l'eau à un taux contrôlé tel que l'association excipient-désinfectant libère de 0,1 à 10 mg/l de chlore actif par heure, de préférence de 0,2 à 5 mg/l de chlore actif par heure, le désinfectant étant choisi parmi le sel de sodium de N-chloro-4-méthylbenzène sulfonamide sous forme anhydre ou dihydratée, le sel de sodium de 1,3-dichloro-s-triazine-2,4,6 trione sous forme anhydre ou dihydratée, et leurs mélanges, le désinfectant étant de préférence le sel de sodium de 1,3-dichloro-s-triazine-2,4,6 trione sous forme dihydratée.

11. Produit selon la revendication 10, **caractérisé en ce que** l'excipient est choisi parmi les composés hydrosolubles à dissolution lente, de préférence parmi la gomme arabique ou acacia, la gomme adragante, la gomme de caroubier, la gomme xanthane, la gomme guar, et leurs mélanges.

12. Produit selon la revendication 10, **caractérisé en ce que** l'excipient est choisi parmi les composés insolubles hydrophiles gonflant dans l'eau, de préférence parmi les amidons modifiés, les amidons gélatinisés, la fécule de pomme de terre, et leurs mélanges.

13. Produit selon l'une quelconque des revendications précédentes, **caractérisé en ce que** ladite deuxième couche comprend en outre un système effervescent comprenant un mélange d'une base faible, telle que le bicarbonate de sodium, et d'un polyacide organique hydrosoluble, de préférence choisi parmi l'acide citrique, l'acide malique, l'acide tartrique, l'acide malonique, l'acide fumarique, l'acide maléique, l'acide adipique, l'acide succinique et leurs mélanges, le système effervescent étant présent dans ladite deuxième couche à une teneur inférieure ou égale à 50% en poids, de préférence allant de 10% à 40% en poids, par rapport au poids de la deuxième couche.

14. Produit selon l'une quelconque des revendications précédentes, **caractérisé en ce** ladite première couche comprend en outre du sable micronisé.

15. Produit selon l'une quelconque des revendications précédentes, **caractérisé en ce que** ladite première couche comprend en outre un absorbeur d'humidité, par exemple du trisilicate de magnésium.

16. Procédé de préparation d'un produit solide compacté de purification d'eau comprenant au moins une première couche et au moins une deuxième couche, **caractérisé en ce qu'**il comprend les étapes suivantes :
- a°) on prépare un premier mélange pulvérulent comprenant au moins un système coagulant-floculant comprenant au moins un sel inorganique polyvalent, au moins un polymère cationique hydrosoluble, au moins un polymère anionique à haut poids moléculaire et au moins un alginate de sodium, et optionnellement un absorbeur d'humidité, par exemple du trisilicate de magnésium,
- b°) on prépare un deuxième mélange pulvérulent comprenant au moins un désinfectant libérant du chlore actif au contact de l'eau,
- c°) on précompacte le mélange obtenu en b°) dans une pastilleuse,
- d°) on rajoute dans la pastilleuse le mélange obtenu en a°) et on compacte le tout pour obtenir un produit bicouche.

## Claims

1. A compacted solid product for the purification of water comprising:
- at least one first layer comprising at least one coagulant-flocculant system comprising at least one polyvalent inorganic salt, at least one water-soluble cationic polymer and at least one high molecular weight anionic polymer;
- at least one second layer comprising at least one disinfectant that releases available chlorine in contact with water,
**characterized in that** said coagulant-flocculant system also comprises a sodium alginate.

2. The product as claimed in the preceding claim, **characterized in that** the sodium alginate is present in said first layer at a content ranging from 0.1 to 10% by weight, preferably ranging from 2 to 5% by weight, relative to the weight of said first layer.

3. The product as claimed in any one of the preceding claims, **characterized in that** said high molecular weight anionic polymer has a molecular weight greater than or equal to 5 000 000 D, preferably greater than or equal to 10 000 000 D, said high molecular weight anionic polymer being present in said first layer at a content ranging from 0.01 to 0.4% by weight relative to the weight of said first layer.

4. The product as claimed in any one of the preceding claims, **characterized in that** said high molecular weight anionic polymer is a water-soluble copolymer of sodium acrylate.

5. The product as claimed in any one of the preceding claims, **characterized in that** the polyvalent inorganic salt is a trivalent metal salt chosen from ferric sulfate, aluminum sulfate, polyaluminum hydroxychloride and mixtures thereof.

6. The product as claimed in any one of the preceding claims, **characterized in that** the water-soluble cationic polymer is a water-soluble cationic polymer of diallyldimethylammonium chloride.

7. The product as claimed in any one of the preceding claims, **characterized in that** the first layer also comprises at least one disintegrating system comprising at least one disintegrating agent chosen from cellulose and derivatives thereof, effervescent combinations of a water-soluble polyorganic acid and of a weak base, and mixtures thereof, the disintegrating agent is present in the first layer at a content less than or equal to 50% by weight, preferably at a content ranging from 20% to 40% by weight, relative to the weight of the first layer.

8. The product as claimed in the preceding claim, **characterized in that** the disintegrating agent is a cellulose, for example amorphous or crystalline cellulose.

9. The product as claimed in claims 5 and 7, **characterized in that** the disintegrating agent is formed from the effervescent combination of a weak base, preferably the sodium carbonate, and of said trivalent metal salt.

10. The product as claimed in any one of the preceding claims, **characterized in that** said second layer also comprises at least one excipient for the disinfectant, said excipient releasing the disinfectant into the water at a controlled rate such that the excipient-disinfectant combination releases from 0.1 to 10 mg/l of available chlorine per hour, preferably from 0.2 to 5 mg/l of available chlorine per hour, the disinfectant being chosen from the sodium salt of N-chloro-4-methylbenzenesulfonamide in the anhydrous or dihydrate form, the sodium salt of 1,3-dichloro-s-triazzne-2,4,6-trione in the anhydrous or dihydrate form, and mixtures thereof, the disinfectant being preferably the sodium salt of 1,3-dichloro-s-triazine-2,4,6-trione in the dihydrate form.

11. The product as claimed in claim 10, **characterized in that** the excipient is chosen from water-soluble compounds that dissolve slowly, preferably from gum arabic or acacia, gum tragacanth, locust bean gum, xanthan gum, guar gum and mixtures thereof.

12. The product as claimed in claim 10, **characterized in that** the excipient is chosen from hydrophilic insoluble compounds that swell in water, preferably from modified starches, gelatinized starches, potato flour, and mixtures thereof.

13. The product as claimed in any one of the preceding claims, **characterized in that** said second layer also comprises an effervescent system comprising a mixture of a weak base, such as sodium bicarbonate, and of a water-soluble polyorganic acid preferably chosen from citric acid, malic acid, tartaric acid, malonic acid, fumaric acid, maleic acid, adipic acid, succinic acid and mixtures thereof, the effervescent system being present in said second layer at a content less than or equal to 50% by weight, preferably ranging
from 10 to 40% by weight, relative to the weight of the second layer.

14. The product as claimed in any one of the preceding claims, **characterized in that** said first layer also comprises micronized sand.

15. The product as claimed in any one of the preceding claims, **characterized in that** said first layer also comprises a moisture absorber, for example magnesium trisilicate.

16. A process for the preparation of a compacted solid product for the purification of water comprising at least one first layer and at least one second layer, **characterized in that** it comprises the following steps:
- a°) a first pulverulent mixture is prepared comprising at least one coagulant-flocculant system comprising at least one polyvalent inorganic salt, at least one water-soluble cationic polymer, at least one high molecular weight anionic polymer and at least one sodium alginate, and optionally one moisture absorber, for example magnesium trisilicate,
- b°) a second pulverulent mixture is prepared comprising at least one disinfectant that releases available chlorine in contact with water;
- c°) the mixture obtained in b°) is precompacted in a pelleting machine;
- d°) the mixture obtained in a°) is added to the pelleting machine and the combined mixture is compacted in order to obtain a two-layer product.

## Patentansprüche

1. Festes verdichtetes Produkt zur Reinigung von Wasser, das Folgendes aufweist:
- zumindest eine erste Schicht, die zumindest Folgendes aufweist, nämlich ein koagulierendes-ausflockendes System, das zumindest ein polyvalentes anorganisches Salz aufweist, zumindest ein wasserlösliches kationisches Polymer und zumindest ein anionisches Polymer mit hohem Molekulargewicht,
- zumindest eine zweite Schicht, die zumindest ein Desinfektionsmittel aufweist, das bei Kontakt mit Wasser aktives Chlor freisetzt,
**dadurch gekennzeichnet, dass** das koagulierende-ausflockende System ferner ein Natriumalginat aufweist.

2. Produkt nach dem vorhergehenden Anspruch, **dadurch gekennzeichnet, dass** das Natriumalginat in der ersten Schicht in einem Gehalt von 0,1 bis 10 Gew,-%, vorzugsweise von 2 bis 5 Gew.-%, bezogen auf das Gewicht der ersten Schicht, vorliegt.

3. Produkt nach einem der vorhergehenden Ansprüche, **dadurch gekennzeichnet, dass** das anionische Polymer mit hohem Molekulargewicht ein Molekulargewicht von 5 000 000 D oder mehr, vorzugsweise von 10 000 000 D oder mehr aufweist, wobei das anionische Polymer mit hohem Molekulargewicht in der ersten Schicht in einem Gehalt von 0,01 bis 0,4 Gew.-% bezogen auf das Gewicht der ersten Schicht, vorliegt.

4. Produkt nach einem der vorhergehenden Ansprüche, **dadurch gekennzeichnet, dass** das anionische Polymer mit hohem Molekulargewicht ein wasserlösliches Natriumacrylatcopolymer ist.

5. Produkt nach einem der vorhergehenden Ansprüche, **dadurch gekennzeichnet, dass** das polyvalente anorganische Salz ein Salz eines trivalenten Metalls ist, das ausgewählt ist aus Eisensulfat, Aluminiumsulfat, Aluminiumpolyhdroxychlorid und Mischungen davon.

6. Produkt nach einem der vorhergehenden Ansprüche, **dadurch gekennzeichnet, dass** das wasserlösliche kationische Polymer ein wasserlösliches kationisches Polymer von Diallyldimethylammoniumchlorid ist.

7. Produkt nach einem der vorhergehenden Ansprüche, **dadurch gekennzeichnet, dass** die erste Schicht ferner zumindest ein Zerfallssystem aufweist, das zumindest ein Zerfallhilfsmittel aufweist, das ausgewählt ist aus Cellulose und deren Derivaten, den sprudelnden Zusammenlagerungen aus einer wasserlöslichen organischen Polysäure und einer schwachen Base und Mischungen davon, wobei das Zerfallhilfsmittel der ersten Schicht in einem Gehalt von 50 Gew.-% oder weniger, vorzugsweise in einem Gehalt von 20 bis 40 Gew.-%, bezogen auf das Gewicht der ersten Schicht, vorliegt.

8. Produkt nach dem vorhergehenden Anspruch, **dadurch gekennzeichnet, dass** das Zerfallhilfsmittel eine zum Beispiel amorphe oder kristalline Cellulose ist.

9. Produkt nach den Ansprüchen 5 und 7, **dadurch gekennzeichnet, dass** das Zerfallhilfsmittel durch eine sprudelnde Zusammenlagerung einer schwachen Base, vorzugsweise Natriumhydrogencarbonat, und dem Salz des trivalenten Metalls gebildet wird.

10. Produkt nach einem der vorhergehenden Ansprüche, **dadurch gekennzeichnet, dass** die zweite Schicht ferner zumindest einen Hilfsstoff für das Desinfektionsmittel aufweist, wobei der Hilfsstoff das Desinfektionsmittel in Wasser mit einer geregelten Geschwindigkeit freisetzt, so dass die Zusammenlagerung Hilfsstoff-Desinfektionsmittel 0,1 bis 10 mg/l aktives Chlor pro Stunde, vorzugsweise 0,2 bis 5 mg/l aktives Chlor pro Stunde freisetzt, wobei das Desinfektionsmittel ausgewählt ist aus dem Natriumsalz von N-Chlor-4-methylbenzolsulfonamid in wasserfreier Form oder in Form des Dihydrats, dem Natriumsalz von 1,3-Dichlor-s-triazin-2,4,6-trion in wasserfreier Form oder in Form des Dihydrats und Mischungen davon, wobei das Desinfektionsmittel vorzugsweise das Natriumsalz von 1,3-Dichlor-s-triazin-2,4,6-trion in wasserfreier Form ist.

11. Produkt nach Anspruch 10, **dadurch gekennzeichnet, dass** der Hilfsstoff ausgewählt ist aus den sich langsam auflösenden wasserlöslichen Verbindungen, vorzugsweise aus der Gruppe bestehend aus Gummi arabicum oder Acaciagummi, Traganth, Johannisbrotbaumgummi, Xanthangummi, Guargummi und Mischungen davon.

12. Produkt nach Anspruch 10, **dadurch gekennzeichnet, dass** der Hilfsstoff ausgewählt ist aus den hydrophilen, in Wasser quellenden, unlöslichen Verbindungen, vorzugsweise aus den modifizierten Stärken, den gelatinisierten Stärken, der Kartoffelstärke und Mischungen davon.

13. Produkt nach einem der vorhergehenden Ansprüche, **dadurch gekennzeichnet, dass** die zweite Schicht ferner ein sprudelndes System aufweist, das eine Mischung aus einer schwachen Base wie beispielsweise Natriumhydrogencarbonat und einer wasserlöslichen organischen Polysäure aufweist, die vorzugsweise ausgewählt ist aus der Gruppe bestehend aus Zitronensäure, Apfelsäure, Weinsäure, Malonsäure, Fumarsäure, Maleinsäure, Adipinsäure, Bernsteinsäure und Mischungen davon, wobei das sprudelnde System in der zweiten Schicht in einem Gehalt von 50 Gew.-% oder weniger, vorzugsweise von 10 bis 40 Gew,-%, bezogen auf das Gewicht der zweiten Schicht, vorliegt.

14. Produkt nach einem der vorhergehenden Ansprüche, **dadurch gekennzeichnet, dass** die erste Schicht ferner mikronisierten Sand aufweist,

15. Produkt nach einem der vorhergehenden Ansprüche, **dadurch gekennzeichnet, dass** die erste Schicht ferner ein Absorptionsmittel für Feuchtigkeit, beispielsweise Magnesiumsilicat, aufweist.

16. Verfahren zur Herstellung eines festen verdichteten Produkts zur Reinigung von Wasser, das zumindest eine erste Schicht und zumindest eine zweite Schicht aufweist, **dadurch gekennzeichnet, dass** es die folgenden Schritte aufweist:
- a°) Herstellen einer ersten Pulvermischung, die zumindest Folgendes aufweist, nämlich ein koagulierendes-ausflockendes System, das zumindest ein polyvalentes anorganisches Salz aufweist, zumindest ein wasserlösliches kationisches Polymer, zumindest ein anionisches Polymer mit hohem Molekulargewicht und zumindest ein Natriumalginat und gegebenenfalls ein Absorptionsmittel für Feuchtigkeit, zum Beispiel Magnesiumsilicat,
- b°) Herstellen einer zweiten Pulvermischung, die zumindest ein Desinfektionsmittel aufweist, das bei Kontakt mit Wasser aktives Chlor freisetzt,
- c°) Vorverdichten der in Schritt b°) erhaltenen Mischung in einer Tablettiermaschine,
- d°) Zugeben der in a°) erhaltenen Mischung zu der Tablettiermaschine und Verdichten des Ganzen, um ein zweischichtiges Produkt zu erhalten.
